# EUROPEAN PATENT APPLICATION

(11) **EP 3 932 186 A1**
(43) Date of publication of application: **05.01.2022**
(21) Application number: 20183899.2
(22) Date of filing: 03.07.2020
(51) Int. Cl.: A01G 9/08, A01G 9/029

(54) **APPARATUS FOR PLACING GROWTH MEDIUM CELLS IN A TRAY**

(71) Applicant: Björkemar Construction & Consulting BCC AB, 261 35 Landskrona (SE)
(72) Inventor: HÅKANSSON, Aron, 224 74 Lund (SE)
(74) Representative: AWA Sweden AB

(57) **Abstract**

An apparatus (1) for placing growth medium cells in a tray (40) comprises an upper conveyor (10), a lower conveyor (30) and a cell divider arm (20). The upper conveyor has tray filler aisles (12) for cells. The cell divider arm defines a channel along the upper conveyor between a divider arm entrance (24) and a divider arm exit (26). The cell divider arm is pivotable for allowing positioning in front of entrances (16) of different tray filler aisles. The lower conveyor is located below the upper conveyor and has a transportation direction (38) parallel thereto. The lower conveyor is adapted to carry trays of compartments (42) intended for growth medium cells and to place one row (44) of compartments at a time in a loading position, which is placed, in a horizontal direction, outside but in a vicinity of the downstream end of the upper conveyor.

## Description

### TECHNICAL FIELD

The present technology relates in general to apparatuses and methods for handling growth medium cells and in particular to apparatuses and methods for placing growth medium cells in trays.

### BACKGROUND

For the propagation of plants, growth medium cell is often used. Such growth medium cells may be comprised in different kinds of pots, or simple wrapped in a sheet material. The growth medium cells are typically placed in a tray for further transportation. Traditionally, the placing of the growth medium cells has been performed manually which implies a labour intense handling.

A number of automated tray filling machines have been presented. In the published international patent applications WO2017/216145 and WO2017/216146, a distributor apparatus and system for positioning of individual growth medium cells into a propagation tray is disclosed. Unit length growth medium cells are provided in a continuous process giving a row of growth medium cells. The cells are provided onto a compartmentalized conveyor before being entered into a distributing means for placing the cells in a propagation tray. This solution requires large spaces. Furthermore, the provision of growth medium cells has to be synchronized with the operation of the compartmentalized conveyor. There is a demand for simpler and less space-requiring solutions.

### SUMMARY

A general object is to provide a simple and robust tray filling apparatus adapted to operate with a steady intermittent flow of incoming growth medium cells.

The above object is achieved by methods and devices according to the independent claims. Preferred embodiments are defined in dependent claims.

In general words, in a first aspect, an apparatus for placing growth medium cells in a tray comprises an upper conveyor, a lower conveyor and a cell divider arm. The upper conveyor has a plurality of tray filler aisles for cells formed along a transportation direction of the upper conveyor. The exits from the plurality of tray filler aisles are located in level of a downstream end of the upper conveyor. The cell divider arm defines a channel along the upper conveyor between a divider arm entrance and a divider arm exit. The cell divider arm is pivotable for allowing positioning of the divider arm exit in front of entrances of different ones of the plurality of tray filler aisles. The upper conveyor is configured to move cells through the tray filler aisles. The lower conveyor is located below the upper conveyor and has a transportation direction that is parallel to the upper conveyor transportation direction. The lower conveyor is adapted to carry trays of compartments intended for growth medium cells and to place one row of compartments of a tray at a time in a loading position. The rows are directed in a direction perpendicular to the transportation direction of the lower conveyor and the number of compartments in each row equals the number of tray filler aisles. The lower conveyor and the upper conveyor are positioned relative each other so that the loading position of the lower conveyor is placed, in a horizontal direction, outside but in a vicinity of the downstream end of the upper conveyor.

In a second aspect, a method for placing growth medium cells in a tray comprises providing of growth medium cells and dividing the growth medium cells into tray filler aisles of an upper conveyor. The growth medium cells are moved by the upper conveyor within the tray filler aisles over an edge of the upper conveyor. Thereby, the growth medium cells fall down in compartments of a row of a tray on a lower conveyor placed in a loading position beneath the end of upper conveyor.

One advantage with the proposed technology is that a simple and robust tray filling apparatus is provided, adapted to operate with a continuous flow of incoming growth medium cells. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is an elevational view of an embodiment of an apparatus for placing growth medium cells in a tray;
FIGS. 2A-B is a view of an embodiment of a cell divider arm in two different positions;
FIGS. 2C-E are schematic diagrams of different designs of sets of predetermined sequences;
FIG. 3 is a cross-sectional side view of a upper and lower conveyor of an embodiment of an apparatus for placing growth medium cells in a tray;
FIG. 4 is a view of an embodiment of a guide unit;
FIG. 5 is a view of an embodiment of tray filler aisles having a cell index unit with stoppers in a closed position;
FIG. 6 is a view of an embodiment of a cell pusher in an upper position;
FIG. 7 is a view of an embodiment of an apparatus for placing growth medium cells in a tray with a cell disposal aisle;
FIG. 8 is a view of an embodiment of a cell divider arm with two parallel channels;
FIG. 9 illustrates a diagram of an embodiment of a distribution schedule for a two-channel cell divider arm;
FIG. 10 illustrates schematically an embodiment an embodiment of an apparatus for placing growth medium cells in a tray with two cell divider arms;
FIG. 11 illustrates a diagram of an embodiment of a distribution schedule for two cell divider arms; and
FIG. 12 is a flow diagram of steps of an embodiment of a method for placing growth medium cells in a tray.

### DETAILED DESCRIPTION

Throughout the drawings, the same reference numbers are used for similar or corresponding elements.

Many apparatuses for production of growth medium cells provided a stream or row of growth medium cells. These growth medium cells are typically lying down, one after the other, substantially in contact with each other. The main axis, intended to be parallel to the growth direction of the plants growing therein, is typically directed in the direction of the stream or row. As described more in detail below, the growth medium cells can be of different types; without enclosure, i.e. only densely packed growth medium, or with enclosures, typically in the shape of polymer or fibre foils. The provision of growth medium cells is typically made in a predetermined rate.

One of the tasks for the present technology is to modify such a single row of closely spaced lying-down growth medium cells to easily be fit into compartments of a tray, in a standing-up direction.

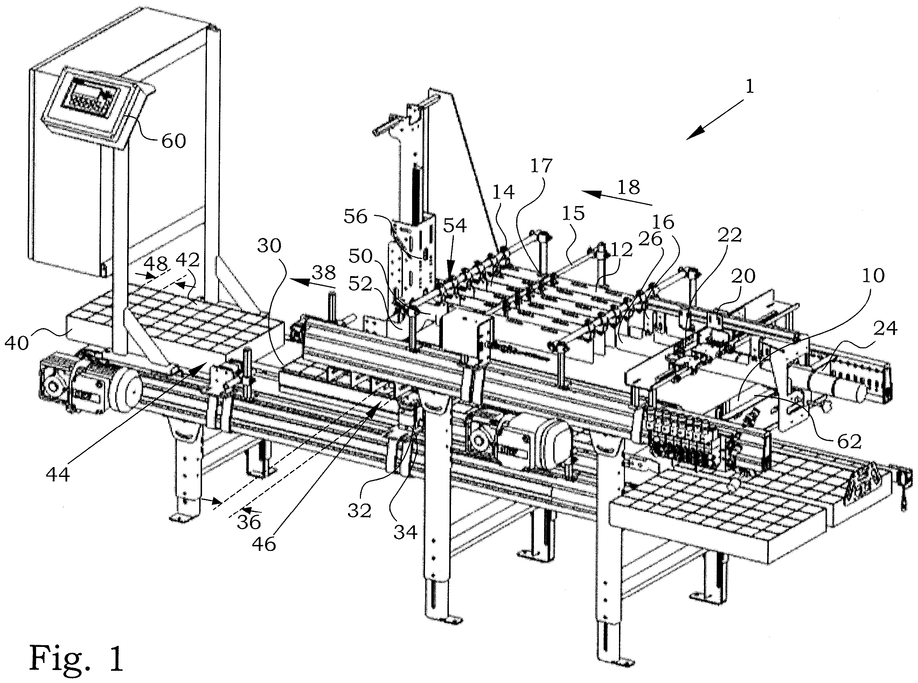

One embodiment of an apparatus 1 for placing growth medium cells in a tray, is schematically illustrated in Figure 1. The apparatus 1 is built in two levels. In the upper level, an upper conveyor 10 is located, transporting individual growth medium cells, and in the lower level, a lower conveyor 30 is located, transporting the trays 40 into which the growth medium cells are to be placed. The apparatus for production of the growth medium cells is not shown in the figure, but a stream of growth medium cells is provided from the right in the figure.

The upper conveyor 10 has a plurality of tray filler aisles 12 for cells formed along a transportation direction 18 of the upper conveyor 10. Exits 14 from the plurality of tray filler aisles 12 are located in level of a downstream end of the upper conveyor 10. The stream of growth medium cells is spread to the tray filler aisles 12 by means of a cell divider arm 20. The cell divider arm 20 defines a channel 22 along the upper conveyor 10 between a divider arm entrance 24 and a divider arm exit 26. The cell divider arm 20 is pivotable for allowing positioning of the divider arm exit 26 in front of entrances 16 of different ones of the plurality of tray filler aisles 12. Due to this pivoting, any growth medium cells that are exiting the cell divider arm 20 can be selected to be entered into any of the tray filler aisles 12.

In the present embodiment, the motion into the channel 22 of the cell divider arm 20, i.e. into the divider arm entrance 24, is caused by one growth medium cell pushing the previous growth medium cell forward. The growth medium cells are then pushed on a bottom sheet. This bottom sheet extends only a small distance into the channel 22 and the growth medium cells then comes into contact with the belt of the conveyor 10. The belt of the conveyor 10 thereby assists in moving the growth medium cells within the channel 22. When the growth medium cells have entered into the tray filler aisles 12, the upper conveyor 10 is configured to move the cells through the tray filler aisles 12. This is typically caused by having the belt of the conveyor 10 constituting a bottom of the tray filler aisles 12.

Thus, in the upper part of the apparatus 1, growth medium cells can be divided into the plurality of tray filler aisles 12 and being transported to the downstream end 19 of the upper conveyor 10.

The lower conveyor 30 is located below the upper conveyor 10. The lower conveyor 30 has a transportation direction 38 that is parallel to the upper conveyor transportation direction 18. In other words, the upper 10 and lower 30 conveyors can provide movements in the same or in the opposite directions. In the present embodiment, the transport directions 18 and 38 are in the same direction. The lower conveyor 30 is adapted to carry trays 40 of compartments 42 intended for growth medium cells. The lower conveyor 30 is adapted to place one row 44 of compartments of a tray 40 at a time in a loading position 46. The rows 44 are directed in a direction perpendicular to the transportation direction 38 of the lower conveyor 30. The number of compartments 42 in each row 44 equals the number of tray filler aisles 12 of the upper conveyor 10.

The lower conveyor 30 and the upper conveyor 10 are positioned relative each other so that the loading position 46 of the lower conveyor 30 is placed, in a horizontal direction, outside but in a vicinity of the downstream end 19 of the upper conveyor 10. This results in that growth medium cells that are transported through the tray filler aisles 12 and beyond the downstream end 19 of the upper conveyor 10, will turn into a vertical direction and fall down into the compartments 42 of the row 44 at the loading position 46.

The use of the movable cell divider arm 20, the plurality of tray filler aisles 12 and the relative vertical positions of the lower conveyor 30 and the upper conveyor 10 present a convenient solution of the distribution system. Many detailed preferred part solutions, further improving the basic concept, are also provided, which will be described in the detailed description of embodiments here below.

In one embodiment, the upper conveyor 10 is continuously driven during scheduled operation with error-free cells. This has the advantage that the operation control of the upper conveyor 10 can be made very simple. Only an on/off control is needed, which may be used for safety switch-off.

When the apparatus 1 is connected by its divider arm entrance 24 to an apparatus for production of growth medium cells, it may be beneficial if the operation of the upper conveyor 10 can be adapted to the properties of the connected apparatus for production of growth medium cells. This can preferably be performed as a configuration upon installation of the system. If the apparatus for production of growth medium cells is configured for producing growth medium cells of a predetermined height and at an average frequency, this can be utilized to optimize the performance of the upper conveyor 10. The upper conveyor 10 may then preferably be driven with a speed that is higher than the predetermined height times the average frequency. Preferably, the speed is more than 1.5 times higher than the predetermined height times the average frequency. Most preferably the speed is more than 2 times higher than the predetermined height times the average frequency.

Such a conveyor speed result in that the growth medium cells leaving the cell divider arm 20 moves faster than the growth medium cells entering the cell divider arm 20, which ensures that there is a certain distance between each growth medium cell, when they are to enter the tray filler aisles 12. The preferred speed of more than 1.5 times the predetermined height times the average frequency gives a separation between successive growth medium cells entering the tray filler aisles 12 of half said predetermined height. This gives the cell divider arm 20 time to be repositioned between each growth medium cell, if necessary. Analogously, the preferred speed of more than 2 times the predetermined height times the average frequency gives a separation between successive growth medium cells entering the tray filler aisles 12 of a full said predetermined height.

In one embodiment, the apparatus 1 comprises a control unit 60 configured to control the cell divider arm 20. Preferably, the control unit 60 is configured for giving the cell divider arm 20 an intermittent pivoting motion. In this way, the exit 26 of the cell divider arm 20 can be at rest when a growth medium cell moves over from the cell divider arm 20 into one of the tray filler aisles 12. This reduces the wear on the growth medium cells and reduces the risk for the growth medium cells to get stuck in the entrance 16 of the tray filler aisles 12.

In other words, the control unit 60 is further configured to control the pivoting of the cell divider arm 20 to be intermittent, so that the divider arm exit 26 is halted in front of entrances 16 of tray filler aisles 12 for a predetermined time period. This predetermined time period should not end before the growth medium cell has fully left the divider arm exit 26. For this purpose, in a preferred embodiment, the apparatus 1 further comprises a cell detector 28 connected to the control unit 60. The cell detector 28 is arranged to detect any passage of a growth medium cell through the cell divider arm 20. The control unit 60 is thereby further configured to control the pivoting of the cell divider arm 20 to be intermittent, so that the divider arm exit 26 is halted in front of entrances 16 of tray filler aisles 12 during the first predetermined time period after the instant when the cell detector 28 detected a passage of a growth medium cell. Since the cell detector 28 is located a distance from the divider arm exit 26, and by knowledge of the speed of the upper conveyor 10, it can be determined how long time it will take for the front part of the growth medium cell to travel to the divider arm exit 26 and how long time it will take for the growth medium cell to fully leave the cell divider arm 20 and enter into one of the tray filler aisles 12. Preferably, the cell divider arm 20 is halted during that time.

Since the growth medium cells are intended to be filled into the tray one row at the time, the cell divider arm 20 has to distribute growth medium cells among the tray filler aisles 12 in a proper manner. Typically, the distribution of growth medium cells has to be even between the tray filler aisles 12.

In the present embodiment, no queue handling system is provided in the tray filler aisles 12, which calls for that one growth medium cell has to be entered into each tray filler aisle 12 before a next growth medium cell can be entered. This can be described as if the cell divider arm 20 is pivoted according to a set of predetermined sequences of the aisles. In each individual one of such predetermined sequences of the aisles, all aisles are selected once and only once. The sets of predetermined sequences of the aisles may be the same, which means that the cell divider arm 20 repeats the same motion over and over again.

One embodiment may present that at least one of the predetermined sequences of the aisles defines that the aisles are to be selected in order from a first side of the plurality of aisles to a second, opposite, side of the plurality of aisles. If such a predetermined sequence of the aisles is repeated, the cell divider arm 20 will start from one side and allow one growth medium cell into each tray filler aisle 12 in order over to the opposite side. The cell divider arm 20 then returns to the original position again and starts a new operation according to the next predetermined sequences of the aisles

However, this is not a necessary condition. In another embodiment, one set of predetermined sequences of the aisles may differ from the next one.

In one embodiment, a first predetermined sequence of the aisles defines that the tray filler aisles 12 are to be selected in order from the first side of the plurality of tray filler aisles 12 to the second side of the plurality of tray filler aisles 12 and that a second predetermined sequence of the tray filler aisles 12 defines that the tray filler aisles 12 are to be selected in order from the second side of the plurality of tray filler aisles 12 to the first side of the plurality of tray filler aisles 12, wherein the set of predetermined sequences comprises the first and second predetermined sequences alternatingly.

In such an embodiment, the cell divider arm 20 will distribute growth medium cell during a scan first in one direction and then an opposite scan in the other direction, i.e. it distributes growth medium cell both forth and back in the pivoting motion.

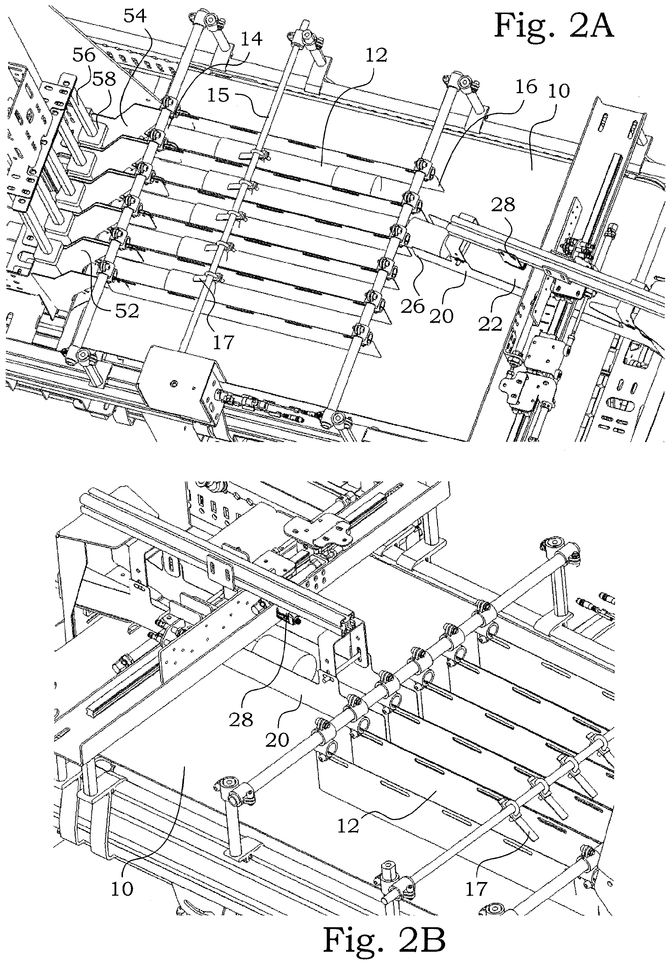

Figures 2A and 2B illustrate the cell divider arm 20 when positioned in two different positions. Here, the placement of the divider cell detector 28 is clearly noticeable.

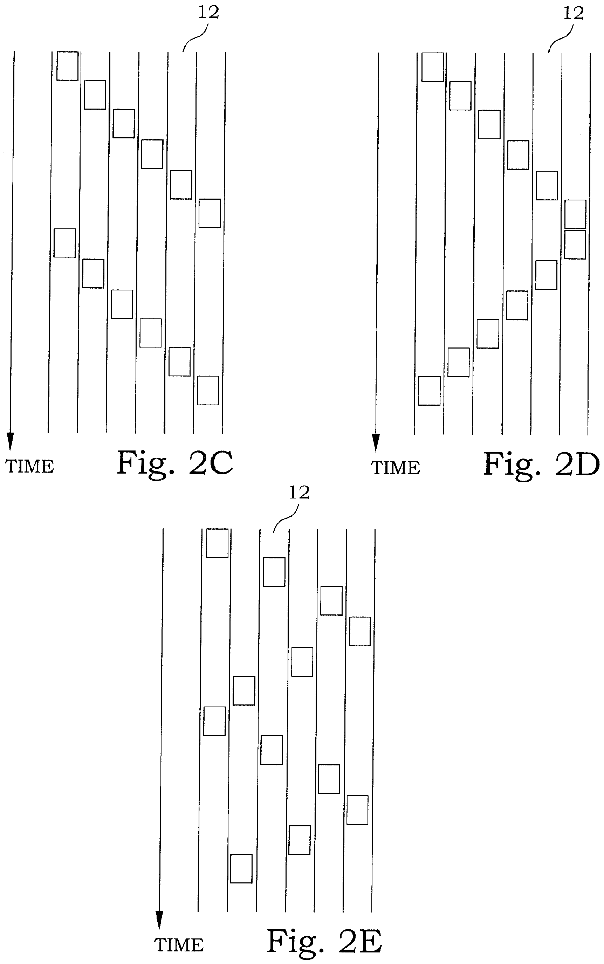

Figures 2C-E illustrates schematic diagrams of different designs of sets of predetermined sequences. In Figure 2C, each aisle is served in a fixed order from the left to the right. In Figure 2D, the filling takes place in alternating direction. In Figure 2E, a single set of predetermined sequences presenting a forward and back motion is illustrated. In these cases, the arrangement comprises six tray filler aisles 12.

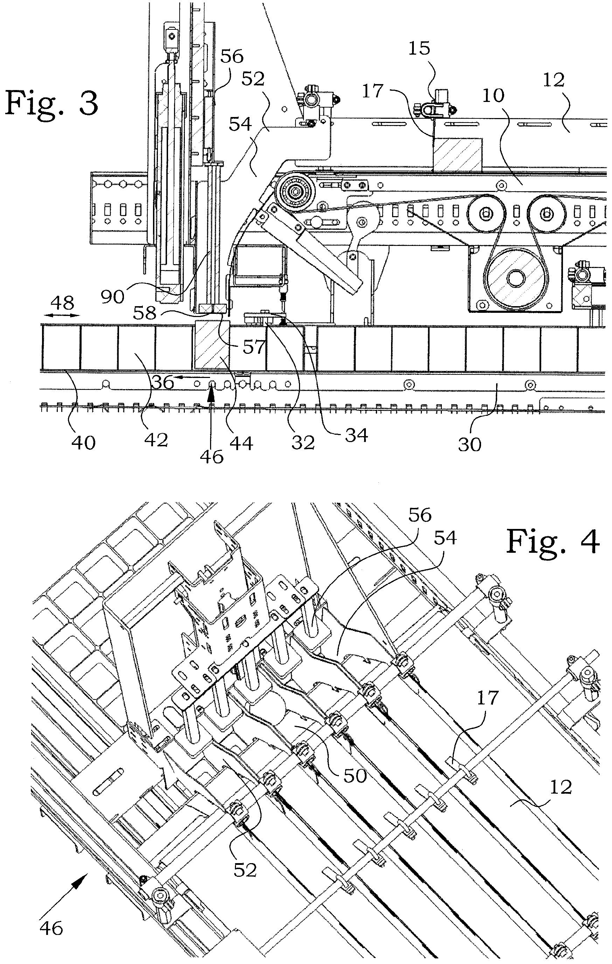

Figure 3 illustrates an embodiment of an apparatus 1 for placing growth medium cells in a tray seen from the end side, i.e. the downstream end. Here, the lower conveyor 30 arrangement of this particular embodiment is seen more in detail. In this embodiment, the lower conveyor 30 is also continuously driven. When a tray 40 is placed at the belt of the lower conveyor 30, it is thereby transported towards the loading position 46. If previous trays 40 still are present at the loading position, the new tray is prevented from moving further and is thereby sliding on top of the moving belt of the lower conveyor 30. This concept thus ensures that there always are waiting trays 40 behind the loading position 46.

This embodiment of the apparatus 1 comprises a tray index unit 34 arranged at the lower conveyor 30. The tray index unit 34 comprises tray-engaging stoppers 32 that are arranged to be moved between a stopping position and a loading position. In the stopping position, the tray-engaging stoppers 32 interact with compartments 42 of the tray 40, which thereby prohibits any motion of the tray 40. In the releasing position, the tray 40 is free to follow the motion of the lower conveyor 30.

The tray index unit 34 is configured to move the tray-engaging stoppers 32 from the stopping position to the releasing position when all compartments 42 in the row 44, presently placed at the loading position 46, are filled. After a predetermined time, the tray-engaging stoppers 32 are returned into the stopping position for interacting with compartments 42 of a next row 44. This predetermined time is adapted to the speed of the lower conveyor so that the back wall of the compartment has time to pass the tray-engaging stoppers 32 before they are returned into the stopping position. The tray 40 is then moved a distance 36 corresponding to the width 48 of one row 44 before being stopped. When a tray 40 is completely filled, a next tray 40 typically waits behind and is stopped with its first row at the loading position. The filled tray 40 follows the motion of the lower conveyor to an unloading position.

Anyone skilled in the art realizes that the detailed design of the tray index unit 34 can be made in many different ways. The tray-engaging stoppers can be shaped and controlled in other ways, known by anyone skilled in the art.

The operation of the lower conveyor 30 does not necessarily have to be continuous. As described further below, it might even be of benefit to halt it during some periods. However, the almost continuous operation solves any problems ensuring waiting trays and ensuring that filled trays are transported away from the loading position 46 relatively fast.

As mentioned above, the growth medium cell is intended to tilt over the end of the upper conveyor 10 and fall into the compartments of the tray. As seen in Figure 4, in a preferred embodiment, the apparatus 1 further comprises a guide unit 50 positioned straight above the loading position 46. The guide unit 50 has guide surfaces 52 defining fall-down paths between each tray filler aisle exit 14 and a respective compartment in the row of compartments at the loading position 46. Preferably, the guide surfaces constituting a continuation of the belt of the upper conveyor 10 may preferably be slightly inclined and/or curved in order to facilitate the tilting of the growth medium cells. However, the slope of such guide surfaces has to be steep enough to ensure a sliding of the growth medium cells down to the compartments.

Due to the configuration of the lower conveyor 30, the rows of compartments are only available at the loading position 46 during certain time periods. These time periods are in the above presented embodiment determined by the opening and closing of the tray-engaging stoppers. In most implementations, the provision of growth medium cells is continuous and in order not to risk that any growth medium cell falls down during the motion of the tray, some delay mechanism may be provided.

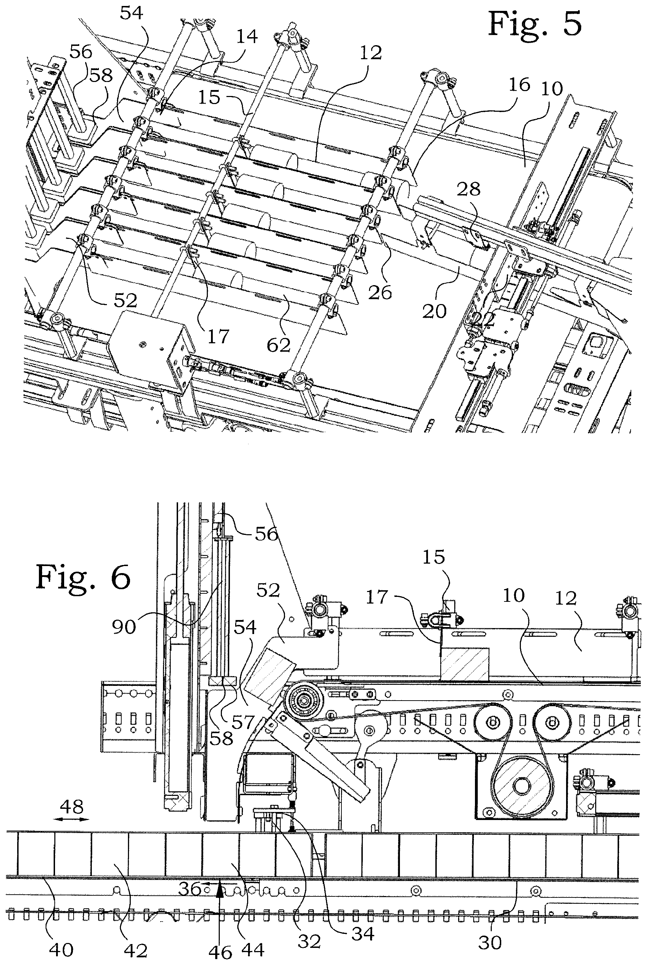

Figures 2A and 5 illustrate the tray filler aisles 12 of an embodiment of an apparatus 1 having a cell index unit 15 with stoppers 17 in an open and closed position, respectively. The cell index unit 15 has one stopper 17 for each tray filler aisle 12. The stoppers 17 are controllable between an open position and a closed position. In the open position, the growth medium cells in the tray filler aisle 12 are allowed to pass. In the closed position, the growth medium cells in the tray filler aisle 12 are prevented from passing the respective stopper 17. Such an arrangement can thus delay growth medium cells for a short while, e.g. for allowing the tray 40 at the lower conveyor 30 to position an empty row of compartments 42 at the loading position 46. Preferably, the control unit 60 is used also for controlling the opening and closing of the stoppers. In the present embodiment, all stoppers 17 are moved together. However, in other embodiments, the stoppers may be moved individually, even though this requires more complex control mechanisms.

The cell index unit 15 has preferably also to be synchronized with the operation of the cell divider arm 20. In one embodiment, the control unit 60 is further configured to close the stoppers 17 of the cell index unit 15 a predetermined time after a predetermined sequence of the tray filler aisles 12 has been ended by the cell divider arm 20. The control unit 60 is further configured to open the stoppers 17 of the cell index unit 15 when the lower conveyor 30 has positioned an empty row in the loading position 46.

The speeds of the upper 10 and lower 30 conveyors, respectively, has preferably to be adapted for ensuring that the time period that the stoppers 17 are in a closed position does not exceed the time for a complete predetermined sequence of the tray filler aisles 12 of the cell divider arm 20.

In one embodiment, the upper conveyor 10 presents an actuating support 62 provided in a closed loop. The actuating support 62 constitutes a bottom of the tray filler aisles 12. In the embodiment, presented above, the actuating support 62 is a belt.

It should, however, be noticed that also other conveyor types than belt conveyors may be used in the present technology. The selection of conveyor technology may be made with respect to the type of growth medium cell used.

In one embodiment, the upper conveyor is adapted to actuate on cells of form stable growth medium.

In another embodiment, the upper conveyor is adapted to actuate on cells of form stable growth medium having a wrapping.

In yet another embodiment, the upper conveyor is adapted to actuate on cells of form stable growth medium having a fibre wrapping.

In some situations, there might be problems for the growth medium cells to move the entire way down to the bottom of the compartments of the tray. In such situations, a cell pusher 56 may be of benefit. Figures 3 and 6 illustrate an embodiment of such a cell pusher 56 in a lower and an upper position, respectively. The growth medium cells are first allowed to fall down as far as they can by means of gravity in the guide unit 50. When all growth medium cells are in place, the cell pusher 56 moves down and pushes the growth medium cells towards the bottom of the compartments in the tray. A typical design of such a cell pusher comprises one flat plate 57 mounted at the end of a rod 90 for each tray filler aisle. The detailed design of the cell pusher 56 can of course be varied according to the knowledge of a person skilled in the art.

Thus, in other words, in one embodiment, the apparatus comprises a cell pusher, adapted to push down cells in the guide unit into compartments of the tray.

In one embodiment, the cell pusher 56 may further comprise dibbling means 58. This makes it possible to arrange for assigning a position for a future seed in the growth medium cell.

The operation of the cell pusher has to be synchronized with the rest of the apparatus. Therefore, preferably, the cell pusher is configured to act when all compartments in the row of the tray presently being placed at the loading position are occupied. The operation of the cell pusher also has to be ended before any new growth medium cells are allowed into the guide unit. This means in practice that the cell index unit has to let the stoppers be in a closed position until the cell pusher has returned to its upper end position.

When the cell pusher is operating, a certain pressure is applied on the tray. This pressure is forwarded to a pressure between the tray and the lower conveyor, which may lead to unnecessary wear of the trays and the conveyor mechanisms. Therefore, in e preferred embodiment, the lower conveyor is configured to be halted during the period when the cell pusher is operative.

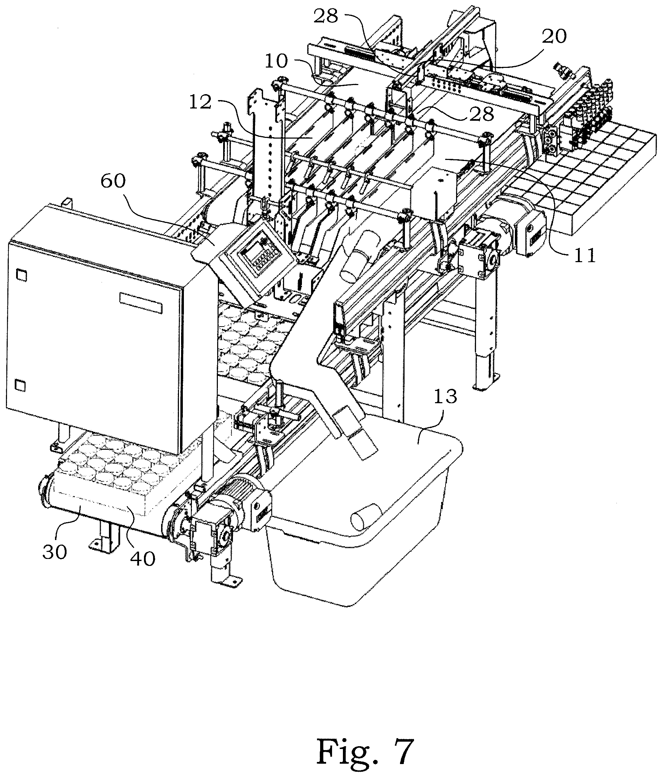

In a perfect world, all growth medium cells entering the apparatus are correct and undamaged. However, in reality, defect growth medium cells do occur occasionally. In a preferred embodiment, the apparatus is also prepared for such situations. In Figure 7, an upper conveyor 10 is illustrated having five normal tray filler aisles 12. However, at the left side an additional aisle is located; a cell disposal aisle 11. This cell disposal aisle 11 does not end in a guide unit to a compartment of a tray, but instead in a guide arrangement leading to a disposal container 13. In other words, in one embodiment, the upper conveyor 10 is provided with a cell disposal aisle 11, exiting into a disposal container 13.

This arrangement can be advantageously used by assistance from the cell detector 28. If the cell detector 28 finds that a growth medium cell being transported through the cell divider arm 20 is defect, the control unit can be informed. Such a defect could e.g. be two inseparable growth medium cells, which could be the result of defective cutting operations in a connected apparatus for production of growth medium cells. A defect growth medium cell could also be a growth medium cell where a wrapping had ruptured, and the growth medium has lost the intended shape.

When the control unit is informed about the existence of a defect growth medium cell moving towards the exit 26 of the cell divider arm 20, the scheduled operation of the pivoting of the cell divider arm 20 may be interrupted and the cell divider arm 20 may be controlled to be placed with the exit 26 of the cell divider arm 20 in front of the cell disposal aisle 11. If the occurrence of a defect growth medium cell was temporary, the control unit 60 could then restart the normal scheduled operation.

In other words, in one embodiment, the cell detector is further configured to detect if cells transported through the cell divider arm are defect. The cell divider arm is configured to interrupt a scheduled operation and to move the divider arm exit to an entrance of the cell disposal aisle if the cell detector indicates that a defect cell is present in the cell divider arm.

In alternative embodiments, more than one cell disposal aisle may be provided. For instance, one cell disposal aisle can be provided at each side of the set of normal tray filler aisles, and when an error occurs, the closest cell disposal aisle may be selected in order to reduce the necessary movements of the cell divider arm.

In the embodiments described above, it has been assumed that the growth medium cells enter in one single row. However, if the capacity of the apparatus is to be increased, there are several feasible alternatives.

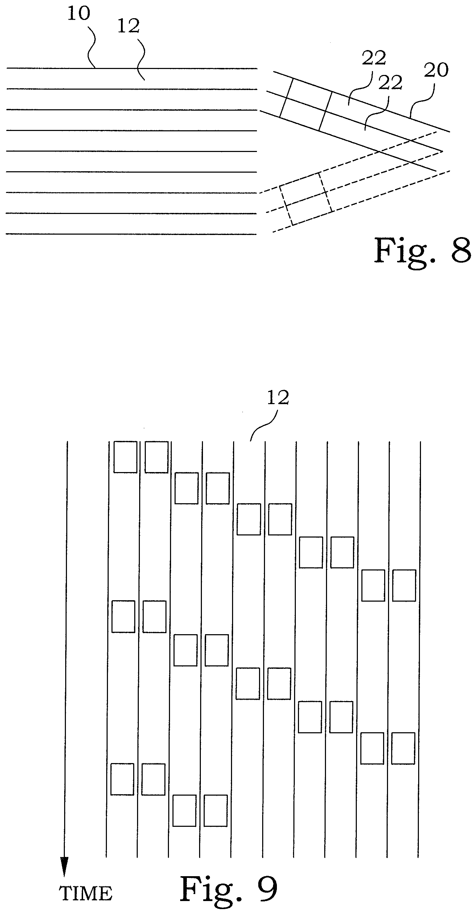

Figure 8 illustrates schematically a solution where two parallel channels 22 are provided within a single cell divider arm 20. In this particular embodiment, the separation between the exits of the two parallel channels 22 agrees with the distance between two neighbouring tray filler aisles 12. In this embodiment, there are eight tray filler aisles 12. Each exit of the channels 22 is thus simultaneously positionable in front of a respective tray filler aisle 12. Another position of the cell divider arm 20 is illustrated in dotted lines. Figure 9 illustrates in a diagram how a distribution schedule may look like for a 10-tray filler aisles embodiment.

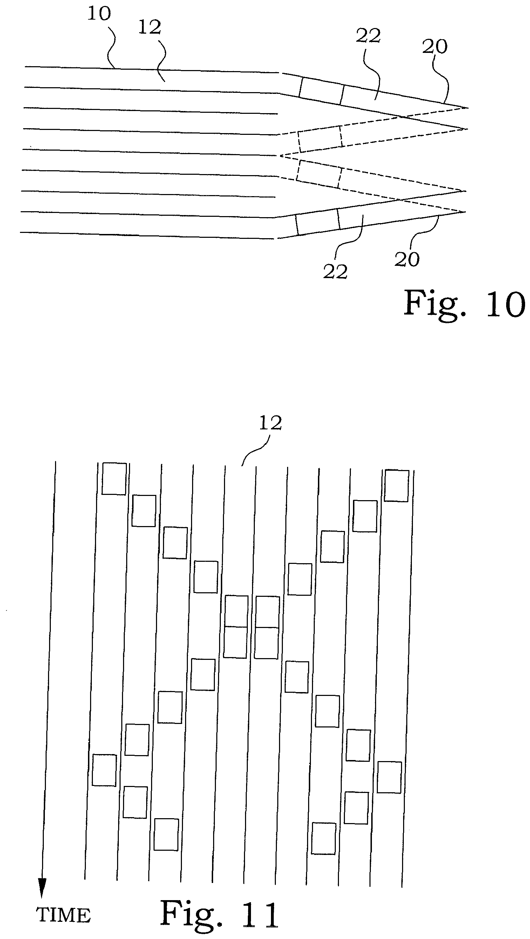

Figure 10 illustrates schematically a solution where two cell divider arms 20 are available, having one channel 22 each. Each cell divider arm 20 may then be configured to cooperate with a respective set of tray filler aisles 12. In this embodiment, there are eight tray filler aisles 12. Other positions of the cell divider arms 20 are illustrated in dotted lines. Figure 11 illustrates in a diagram how a distribution schedule may look like. This may also be combined with the ideas of Figures 8 and 9.

Any person skilled in the art realizes that also more than two parallel channels in a single cell divider arm and/or more than two cell divider arms may be presented in other embodiment.

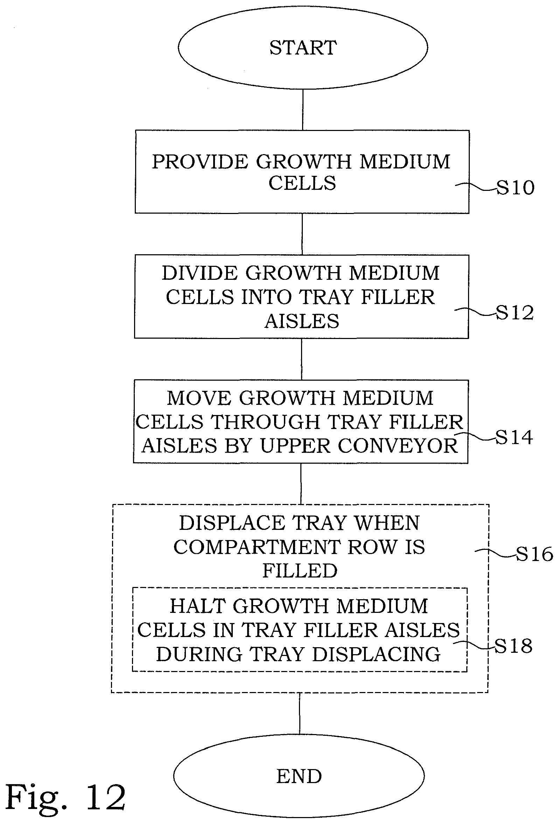

Figure 12 is a flow diagram of step of an embodiment of a method for placing growth medium cells in a tray. In step S10, growth medium cells are provided. The growth medium cells are in step S12 divided into tray filler aisles of an upper conveyor. Preferably, the dividing the growth medium cells into tray filler aisles is made according to a set of predetermined sequences, where one and only one growth medium cell has to be divided into each tray filler aisles in each individual predetermined sequence. In step S14, the growth medium cells are moved by the upper conveyor within the tray filler aisles over an edge of the upper conveyor, whereby the growth medium cells fall down in compartments of a row of a tray on a lower conveyor placed in a loading position beneath the end of upper conveyor.

In a preferred embodiment, the method comprises the step S16, in which the tray is displaced, when a row of compartments placed in the loading position is filled with growth medium cells, to place a row of empty compartments in the loading position.

Also preferably, in step S18, the moving of the growth medium cell through the tray filler aisles is halted during the time the step S16 of displacing the tray is performed.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. An apparatus (1) for placing growth medium cells in a tray (40), said apparatus (1) comprising:
- an upper conveyor (10) having a plurality of tray filler aisles (12) for cells formed along a transportation direction (18) of the upper conveyor (10), wherein exits (14) from the plurality of tray filler aisles (12) are provided in level of a downstream end of the upper conveyor (10);
- a cell divider arm (20) defining a channel (22) along the upper conveyor (10) between a divider arm entrance (24) and a divider arm exit (26), said cell divider arm (20) being pivotable for allowing positioning of the divider arm exit (16) in front of entrances (26) of different ones of the plurality of tray filler aisles (12);
wherein the upper conveyor (10) is configured to move cells through the tray filler aisles (12); and
- a lower conveyor (30) provided below the upper conveyor (10) and having a transportation direction (38) that is parallel to the upper conveyor transportation direction (18), said lower conveyor (30) being adapted to carry trays (40) of compartments (42) intended for growth medium cells and to place one row (44) of compartments of a tray (40) at a time in a loading position (46), wherein the rows (44) are directed in a direction perpendicular to the transportation direction (38) of the lower conveyor (30) and the number of compartments (42) in each row (44) equals the number of tray filler aisles (12);
wherein the lower conveyor (30) and the upper conveyor (10) are positioned relative each other so that said loading position (46) of said lower conveyor (30) is placed, in a horizontal direction, outside but in a vicinity of the downstream end of the upper conveyor (10).

2. The apparatus according to claim 1, **characterized by** a tray index unit (34) arranged at the lower conveyor (30) comprising tray-engaging stoppers (32) arranged to be moved between a stopping position, in which the tray-engaging stoppers (32) interact with compartments (42) of the tray (40) in the loading position (46), prohibiting any motion of the tray (40), and a releasing position, in which the tray (40) in the loading position (46) is free to follow the motion of the lower conveyor (30).

3. The apparatus according to claim 1 or 2, **characterized by** further comprising:
- a guide unit (50) positioned straight above the loading position (46), having guide surfaces (52) defining fall-down paths between each tray filler aisle exit (14) and a respective compartment (42) in the row (44) of compartments at the loading position (46).

4. The apparatus according to any of the claims 1 to 3, **characterized by** further comprising:
- a control unit (60) configured to control an intermittent pivoting of the cell divider arm (20,
the control unit (60) being further configured to control the pivoting to be intermittent, so that the divider arm exit (26) is halted in front of entrances (16) of tray filler aisles (12) for a first predetermined time period.

5. The apparatus according to claim 4, **characterized by** further comprising a cell detector (28) arranged to detect any passage of a cell through the cell divider arm (20), whereby the control unit is further configured to control the pivoting to be intermittent, so that the divider arm exit (26) is halted in front of entrances (16) of tray filler aisles (12) during said first predetermined time period after the instant when the cell detector (28) detected a passage of a cell.

6. The apparatus according to claim 4 or 5, **characterized in that** the control unit (60) is configured for pivoting of the cell divider arm (20) according to a set of predetermined sequence of the tray filler aisles (12), where all tray filler aisles (12) are selected once and only once in each individual predetermined sequence.

7. The apparatus according to any of the claims 4 to 6, **characterized by** further comprising:
- a cell index unit (15) having one stopper (17) for each tray filler aisle (12), said stoppers (17) are controllable between an open position allowing cells in the tray filler aisle (12) to pass and a closed position where cells in the tray filler aisle (12) is prevented from passing the respective stopper (17).

8. The apparatus according to any of the claims 1 to 7, **characterized by** further comprising:
- a cell pusher (56), adapted to push down cells in the guide unit (50) into compartments (42) of the tray (40).

9. The apparatus according to claim 8, **characterized in that** the cell pusher (56) further comprises dibbling means (58).

10. The apparatus according to any of the claims 1 to 9, **characterized in that** the upper conveyor (10) is provided with at least one cell disposal aisle (11), exiting into a disposal container (13), whereby the cell detector (28) is further configured to detect if cells transported through the cell divider arm (20) are defect, and whereby the cell divider arm (20) is configured to interrupt a scheduled operation and to move the cell divider arm exit (26) to an entrance of the cell disposal aisle (11) if the cell detector (28) indicates that a defect cell is present in the cell divider arm (20).

11. The apparatus according to any of the claims 1 to 10, **characterized in that** the cell divider arm (20) has more than one channel (22), whereby each exit of the channels (22) are simultaneously positionable, and/or that the apparatus (1) comprises more than one cell divider arm (20), whereby each cell divider arm (20) is configured to cooperate with a respective set of tray filler aisles (12).

12. A method for placing growth medium cells in a tray (40), said method comprising the steps of:
- providing (S10) growth medium cells;
- dividing (S12) the growth medium cells into tray filler aisles (12) of an upper conveyor (10);
- moving (S14) the growth medium cells by the upper conveyor (10) within the tray filler aisles (12) over an edge of the upper conveyor (10), whereby the growth medium cells fall down in compartments (42) of a row (44) of a tray (40) on a lower conveyor (30) placed in a loading position (46) beneath the end of upper conveyor (10).

13. The method according to claim 12, **characterized in that** the dividing (S12) the growth medium cells into tray filler aisles (12) is made according to a set of predetermined sequences, where one and only one growth medium cell has to be divided into each tray filler aisle (12) in each individual predetermined sequence.

14. The method according to claim 12 or 13, **characterized by** the further step of:
- displacing (S16) the tray (40), when a row (44) of compartments (42) placed in the loading position (46) is filled with growth medium cells, to place a row (44) of empty compartments (42) in the loading position (46).

15. The method according to claim 14, **characterized by** the further step of:
- halting (S18) the moving of the growth medium cell through the tray filler aisles (12) during the time the step of displacing (S16) the tray (40) is performed.
